# EUROPÄISCHE PATENTANMELDUNG

(11) **EP 3 032 534 A1**
(43) Veröffentlichungstag der Anmeldung: **15.06.2016**
(21) Anmeldenummer: 14197765.2
(22) Anmeldetag: 12.12.2014
(51) Int. Cl.: G10L 15/22

(54) **Verfahren und Vorrichtung für ein selbstorganisierendes Sprachverarbeitungssystem zur Gebäudeautomation**

(71) Anmelder: Deutsche Telekom AG, 53113 Bonn (DE)
(72) Erfinder: Kraft, Andreas, 14129 Berlin (DE); Sayegh, Andreas, 10437 Berlin (DE); Jenschar, Thomas, 13503 Berlin (DE); Sinning, Thorsten, 52080 Aachen (DE); Merrall, Simon, 10178 Berlin (DE)
(74) Vertreter: Vossius & Partner Patentanwälte Rechtsanwälte mbB

(57) **Zusammenfassung**

Verfahren und System zur Steuerung eines Systems zur Gebäudeautomation, wobei das Verfahren folgende Schritte aufweist: (a) Empfangen und/oder Senden von Dialogdaten durch ein Dialogkoordinatormodul von bzw. an ein Dialog Ein- Ausgabemodul; (b) Vergleichen der Dialogeingaben durch ein Kontextverarbeitungsmodul mit bekannten Vokabeln und Kontextdaten in einer Ontologiedatenbank; (c) Interpretieren und Bewerten von erkannten und/oder nicht erkannten Vokabeln und/oder Kontextdaten durch das Kontextverarbeitungsmodul, wobei das Kontextverarbeitungsmodul einen Genauigkeitswert für das Vergleichsergebnis aus Schritt (b) vergibt und diesen in der Ontologiedatenbank speichert; (d) Vergleichen des in Schritt (c) vergebenen Genauigkeitswertes mit einem vorher festgelegten Schwellwert durch das Kontextverarbeitungsmodul; (e1) Initiieren mindestens eines Lerndialogs mit dem Nutzer durch ein Lernverarbeitungsmodul falls das Kontextverarbeitungsmodul feststellt, dass der Genauigkeitswert unterhalb des vorher festgelegten Schwellwerts liegt, wobei der Lerndialog geeignet ist den Genauigkeitswert des Vergleichsergebnisses zu erhöhen oder zu verringern, (e2) Verarbeiten des Lerndialogs durch das Lernverarbeitungsmodul und Speichern von neu gelernten Vokabeln und/oder Kontextdaten in der Ontologiedatenbank, wobei die Schritte (b) bis (d) von dem Kontextverarbeitungsmodul solange erneut ausgeführt werden bis das Kontextverarbeitungsmodul feststellt, dass der Genauigkeitswert des Vergleichsergebnisses größer als der vorher festgelegte Schwellwert ist; und (f) Ausgeben von Steuerbefehlen zum Steuern von mit dem System verbundenen Geräten sobald das Kontextverarbeitungsmodul feststellt, dass der Genauigkeitswert des Vergleichsergebnisses größer als der vorher festgelegte Schwellwert ist.

## Beschreibung

### Technisches Gebiet

Die vorliegende Erfindung bezieht sich auf ein Verfahren und eine Vorrichtung für ein selbstorganisierendes Sprachverarbeitungssystem zur Gebäudeautomation und allgemein auf das Gebiet der Gebäudeautomation, speziell auf eine Vokabularaggregation und Sprachsteuerung zur Wechselwirkung mit Home Gateways einer Gebäudeautomationsplattform.

### Hintergrund der Erfindung

Das Dokument US 20140108019 A1 betrifft ein System zur Heimautomation. Das Heimautomationssystem umfasst ein mehrschichtiges und mit mehreren Ausführungssträngen ausgestattetes Dialoggerät.

Das System weist Sprachsteuerung zur Steuerung und Abfrage von Haushaltsgeräten auf. Das System kann durch natürliche Sprache über eine Schnittstelle, einen Tabletcomputer im Haus oder über ein Smartphone ferngesteuert werden. Die Steuerung bezieht sich auf alle Geräte in einem Smart Home, wobei die Geräte mit Sensorik und Aktorik ausgestattet sind und das System Interaktionsregeln durch den sprachlichen Dialog und die Bedienung der Geräte durch den Nutzer mittels der Sensoren an den Geräten aufstellt. Das System lernt interaktiv neue Vokabeln und Zusammenhänge aus dem Gebrauch der Geräte und den Vorlieben des Nutzers.

Probleme treten allerdings auf, wenn z.B. durch den Nutzer neue Geräte an das System angeschlossen werden, über die bisher keine Erkenntnisse vorliegen. Ferner ist es ein Problem der bekannten Systeme, geänderte Angewohnheiten des Nutzers zu erkennen und durch neue Algorithmen in dem System zu berücksichtigen. Ähnliches gilt bei einer veränderten Nutzung eines bereits angeschlossenen und angelernten Gerätes. Weiterhin stellt in einem Mehrbenutzerbetrieb, wie es im häuslichen Umfeld die Regel ist, die Unterscheidung einzelner Nutzer ein wichtiges Merkmal dar, da einzelne Nutzer unterschiedliche Vokabeln, Synonyme etc. benutzen.

### Zusammenfassung der Erfindung

Die der vorliegenden Erfindung zu Grunde liegende Aufgabe besteht darin, ein Verfahren und eine Vorrichtung bereitzustellen, das die oben erwähnten Probleme der bekannten Systeme beseitigt.

Diese Aufgabe wird mit den Merkmalen der unabhängigen Patentansprüche gelöst. Die abhängigen Patentansprüche beziehen sich auf weitere Aspekte der Erfindung.

Gemäß einem Aspekt der vorliegenden Erfindung wird ein Verfahren zur Steuerung eines Systems zur Gebäudeautomation bereitgestellt, wobei das Verfahren folgende Schritte aufweist: (a) Empfangen und/oder Senden von Dialogdaten durch ein Dialogkoordinatormodul von bzw. an ein Dialog Ein- Ausgabemodul; (b) Vergleichen der Dialogeingaben durch ein Kontextverarbeitungsmodul mit bekannten Vokabeln und Kontextdaten in einer Ontologiedatenbank; (c) Interpretieren und Bewerten von erkannten und/oder nicht erkannten Vokabeln und/oder Kontextdaten durch das Kontextverarbeitungsmodul, wobei das Kontextverarbeitungsmodul einen Genauigkeitswert für das Vergleichsergebnis aus Schritt (b) vergibt und diesen in der Ontologiedatenbank speichert; (d) Vergleichen des in Schritt (c) vergebenen Genauigkeitswertes mit einem vorher festgelegten Schwellwert durch das Kontextverarbeitungsmodul; (e1) Initiieren mindestens eines Lerndialogs mit dem Nutzer durch ein Lernverarbeitungsmodul falls das Kontextverarbeitungsmodul feststellt, dass der Genauigkeitswert unterhalb des vorher festgelegten Schwellwerts liegt, wobei der Lerndialog geeignet ist den Genauigkeitswert des Vergleichsergebnisses zu erhöhen oder zu verringern, (e2) Verarbeiten des Lerndialogs durch das Lernverarbeitungsmodul und Speichern von neu gelernten Vokabeln und/oder Kontextdaten in der Ontologiedatenbank, wobei die Schritte (b) bis (d) von dem Kontextverarbeitungsmodul solange erneut ausgeführt werden bis das Kontextverarbeitungsmodul feststellt, dass der Genauigkeitswert des Vergleichsergebnisses größer als der vorher festgelegte Schwellwert ist; und (f) Ausgeben von Steuerbefehlen zum Steuern von mit dem System verbundenen Geräten sobald das Kontextverarbeitungsmodul feststellt, dass der Genauigkeitswert des Vergleichsergebnisses größer als der vorher festgelegte Schwellwert ist.

Vorzugsweise kann das Lernverarbeitungsmodul eine Bewertung des Lerndialogs durchführen und die Bewertung in der Ontologiedatenbank speichern.

Ferner kann das Verfahren weitere Schritte zum (a1) Verarbeiten von Dialogeingaben eines Nutzers durch das Dialog Ein-/Ausgabemodul zu Dialogdaten; und zum (a2) Übertragen der Dialogdaten von dem Dialog Ein-/Ausgabemodul an das Dialogkoordinatormodul enthalten.

Die oben genannten Dialogeingaben können dabei mindestens eine der folgenden Eingaben aufweisen: Spracheingaben, Texteingaben, Gesteneingaben, Berührungseingaben, Geräuscheingaben, Morseeingaben.

Vorzugsweise können in der Ontologiedatenbank zu den bekannten Vokabeln die zugehörigen Steuerbefehle und Netzwerkadressen der zu steuernden Geräte als Kontextdaten gespeichert sein.

Desweiteren kann das Verarbeiten der Dialogeingaben des Nutzers durch das Dialog Ein-/Ausgabemodul in Schritt (a1) ferner einen Schritt zum Anreichern der Dialogeingaben durch Kontextdaten, mit Hilfe eines lokalen und/oder externen Dialoginterpretermoduls, aufweisen.

Gemäß einer bevorzugten Ausführungsform der vorliegenden Erfindung kann der Lerndialog im oben erwähnten Schritt (e1) folgende weitere Schritte aufweisen: (e1.1) Übermitteln des Lerndialogs durch das Lernverarbeitungsmoduls an das Dialog Ein-/Ausgabemodul; (e1.2) Ausgeben des Lerndialogs als Dialogausgaben durch das Dialog Ein-/Ausgabemodul; (e1.3) Verarbeiten von Dialogeingaben des Nutzers als Antwort auf die Dialogausgabe in Schritt (e1.2); (e1.4) Übertragen der Dialogdaten an das Dialogkoordinatormodul; und (e1.5) Zurückgeben der Dialogdaten an das Lernverarbeitungsmodul.

Gemäß eines weiteren Aspekts der vorliegenden Erfindung wird ein Verfahren zum Installieren von Ergänzungsmodulen, vorzugsweise in einem Verfahren nach einem der vorstehend genannten Aspekte bereitgestellt, wobei die Installation von Ergänzungsmodulen die folgenden Schritte aufweist: (g) Installieren des Ergänzungsmoduls; (h) Übertragen und Speichern vorzugsweise vorrübergehendes Speichern von neuen Vokabeln und/oder Kontextdaten in einer Ontologiedatenbank; (i) Überprüfen von Überschneidungen oder Widersprüchen der neuen mit alten Vokabeln und/oder Kontextdaten in der Ontologiedatenbank; (j) Beheben von Überschneidungen oder Widersprüchen durch vorherbestimmte Regeln in der Ontologiedatenbank; und (k) Bestätigen oder Melden von Fehlern über die neuen Vokabeln und/oder Kontextdaten an das Ergänzungsmodul.

Bei den Ergänzungsmodulen kann es sich dabei um das Installieren eines Softwaremoduls (z.B. als Download aus dem Internet, von einem Datenträger etc.), das Vokabular enthalten handeln. Aber auch das Anbringen einer neuen Hardware kann zur Installation eines Ergänzungsmoduls mit neuem Vokabular führen.

Vorzugsweise erfolgt das Beheben von Überschneidungen oder Widersprüchen in Schritt (j) durch Überschreiben von alten Vokabeln und/oder Kontextdaten oder durch Markieren von gleichen Vokabeln und/oder Kontextdaten, die gesondert aber gleichwertig behandelt werden.

Ferner kann das Beheben von Überschneidungen oder Widersprüchen in Schritt (j) zu einer Erhöhung oder Verringerung des Genauigkeitswertes bereits vorhandener Vokabeln und/oder Kontextdaten führen.

Gemäß eines weiteren Aspekts der vorliegenden Erfindung wird ein Verfahren zum Deinstallieren von Ergänzungsmodulen, vorzugsweise in einem Verfahren nach einem der vorstehenden Aspekte bereitgestellt, wobei das Deinstallieren eines Ergänzungsmoduls aufweist: Entfernen der zu dem Ergänzungsmodul gehörenden Vokabeln und/oder Kontextdaten aus einer Ontologiedatenbank. Vorzugsweise soll das Entfernen eines Moduls dabei nicht den Zustand der Ontologiedatenbank vor der Installation des Moduls herstellen, sondern nur die Differenz, die ein Modul hinzugefügt hat soll entfernt werden. Wurden z.B. Module (A, B, C) in der Reihenfolge A, B, C hinzugefügt und danach A wieder entfernt, sollten die Vokabeln und/oder Kontextdaten von B und C nicht entfernt werden.

Vorzugsweise weist das Entfernen von Vokabeln und/oder Kontextdaten dabei folgende Schritte auf: (1) Melden der zu dem Ergänzungsmodul gehörenden Vokabeln und/oder Kontextdaten an die Ontologiedatenbank; (m) Entfernen der zu dem Ergänzungsmodul gehörenden Vokabeln und/oder Kontextdaten aus der Ontologiedatenbank; (n) Bestätigen oder Melden von Fehlern beim Entfernen der Vokabeln und/oder Kontextdaten aus der Ontologiedatenbank an das Ergänzungsmodul; und (o) Trennen der Verbindung zwischen dem Ergänzungsmodul und der Ontologiedatenbank.

Ferner kann das Entfernen des Ergänzungsmoduls zu einer Erhöhung oder Verringerung eines Genauigkeitswertes der Vokabeln und/oder Kontextdaten in der Ontologiedatenbank führen. Vorzugsweise werden die Vokabeln und/oder Kontextdaten hier nicht wirklich entfernt, sondern neu bewertet, z.B. verringert. Beispielsweise für den Fall, dass das Ergänzungsmodul später wieder hinzugefügt wird.

Gemäß eines weiteren Aspekts der vorliegenden Erfindung wird ein System zur Gebäudeautomation, insbesondere zur Durchführung eines Verfahrens nach einem der vorstehenden Aspekte bereitgestellt, wobei das System aufweist: ein Dialogkoordinatormodul konfiguriert zum Empfangen und/oder Senden von Dialogdaten an ein Dialog Ein-/Ausgabemodul; eine Ontologiedatenbank, wobei die Ontologiedatenbank bekannte Vokabeln und Kontextdaten enthält; ein Kontextverarbeitungsmodul das mit dem Dialogkoordinatormodul und der Ontologiedatenbank verbunden ist und konfiguriert ist, um mit dem Dialogkoordinatormodul, der Ontologiedatenbank, und mit dem System verbundenen Geräten zu kommunizieren, und ein Lernverarbeitungsmodul, das mit dem Dialogkoordinatormodul und der Ontologiedatenbank verbunden ist und konfiguriert ist, um mit dem Dialogkoordinatormodul und der Ontologiedatenbank zu kommunizieren. Das Kontextverarbeitungsmodul kann dabei ferner konfiguriert sein um empfangene Dialogdaten mit bekannten Vokabeln und/oder Kontextdaten in der Ontologiedatenbank zu vergleichen; das Vergleichsergebnis zu interpretieren und zu bewerten, indem das Kontextverarbeitungsmodul einen Genauigkeitswert für das Vergleichsergebnis vergibt und diesen in der Ontologiedatenbank speichert; den Genauigkeitswert mit einem vorher festgelegten Schwellwert zu vergleichen; Steuerbefehle zum Steuern der mit dem System verbundenen Geräte auszugeben, sobald das Kontextverarbeitungsmodul feststellt, dass der Genauigkeitswert des Vergleichsergebnisses größer ist als der vorher festgelegte Schwellwert; und einen Lerndialog über das Dialogkoordinatormodul zu initiieren falls das Kontextverarbeitungsmodul feststellt, dass der Genauigkeitswert des Vergleichsergebnisses kleiner als der vorher festgelegte Schwellwert ist. Ferner kann das Lernverarbeitungsmodul konfiguriert sein über das Dialogkoordinatormodul einen Lerndialog mit einem Nutzer durchzuführen, und neu gelernte Vokabeln und/oder Kontextdaten in der Ontologiedatenbank zu speichern, wobei der Lerndialog geeignet ist den Genauigkeitswert zu erhöhen oder zu vermindern.

Das Lernverarbeitungsmodul kann ferner konfiguriert sein den Lerndialog zu bewerten und die Bewertung in der Ontologiedatenbank zu speichern.

Vorzugsweise weist das System ein Dialog Ein-/Ausgabemodul auf, das konfiguriert ist, die Dialogdaten von dem Dialogkoordinatormodul zu empfangen und/oder Dialogdaten an das Dialogkoordinatormodul zu übertragen, wobei das Dialog Ein-/Ausgabemodul ferner konfiguriert ist Dialogeingaben von einem Nutzer zu empfangen und/oder Dialogausgaben an einen Nutzer auszugeben.

Das System kann zusätzlich ein lokales und/oder externes Dialoginterpretermodul aufweisen, wobei das Dialoginterpretermodul konfiguriert ist um die Dialogeingaben durch Kontextdaten anzureichern.

Ferner kann das System einen Anschluss zur Installation/Deinstallation von Ergänzungsmodulen aufweisen, wobei die Ergänzungsmodule neue Vokabeln und/oder Kontextdaten zur Erweiterung der Ontologiedatenbank bereitstellen.

Das Kontextverarbeitungsmodul kann ferner konfiguriert sein bei der Installation der Ergänzungsmodule Überschneidungen oder Widersprüche der neuen mit alten Vokabeln und/oder Kontextdaten in der Ontologiedatenbank durch vorbestimmte Regeln zu beheben.

Das Kontextverarbeitungsmodul kann ferner konfiguriert sein bei der Installation der Ergänzungsmodule den Genauigkeitswert einer bereits bekannten Vokabel Aufgrund von Überschneidungen oder Widersprüchen der neuen mit alten Vokabeln in der Ontologiedatenbank zu erhöhen oder zu verringern.

Desweiteren kann das Kontextverarbeitungsmodul konfiguriert sein bei der Deinstallation eines Ergänzungsmoduls die zu dem Ergänzungsmodul gehörigen Vokabeln und/oder Kontextdaten aus der Ontologiedatenbank zu entfernen. Vorzugsweise soll das Entfernen eines Moduls dabei nicht den Zustand der Ontologiedatenbank vor der Installation des Moduls herstellen, sondern nur die Differenz, die ein Modul hinzugefügt hat soll entfernt werden. Werden z.B. Module (A, B, C) in der Reihenfolge A, B, C hinzugefügt und danach A wieder entfernt, sollten die Vokabeln und/oder Kontextdaten von B und C nicht entfernt werden.

Das Kontextverarbeitungsmodul kann konfiguriert sein den Genauigkeitswert von bestimmten Vokabeln zu erhöhen oder zu verringern sobald ein Ergänzungsmodul deinstalliert wird. Vorzugsweise werden die Vokabeln und/oder Kontextdaten hier nicht wirklich entfernt, sondern neu bewertet, z.B. verringert. Beispielsweise für den Fall, dass das Ergänzungsmodul später wieder hinzugefügt wird.

Gemäß den oben beschriebenen Aspekten ist die vorliegende Erfindung vorteilhaft geeignet, die durch den Nutzer neu angeschlossene Geräte über die bisher keine Erkenntnisse vorliegen, dynamisch in das System zu integriert und so durch den Nutzer bedienbar zu machen.

Die vorliegende Erfindung stellt damit eine dynamische Erweiterbarkeit des Vokabelschatzes für Systeme der Gebäudeautomation bereit. Gemäß der vorliegenden Erfindung können Softwaremodule, die das System um neue Funktionen erweitern bzw. den Anschluss und die Bedienung neu angeschlossener Geräte am Feldbus regeln, Hersteller- und fachspezifische Vokabeln hinzufügen. Dabei wird geregelt, wie mit Überschneidungen zu bereits vorhandenem Vokabular umgegangen wird. Werden diese Softwaremodule entfernt, wird geregelt, wie diese Vokabeln wieder entfernt werden und wie mit Bewertungen dieser Vokabeln verfahren wird.

Erfindungsgemäß wird ein intuitives System zu Benutzerführung geschaffen, welches in der Lage ist, Änderungen des Systems zum Beispiel durch Einschalten oder Bedienen von bisher unbekannten Geräten durch den Nutzer zu erkennen, diese in das System aufzunehmen und durch dynamisches Abfragen und Verknüpfen neuer und bereits vorhandener Fakten schnell und auf einfache Weise fehlende Attribute und Eigenschaften zu erkennen bzw. zu erlernen.

Das erfindungsgemäße System zur Gebäudeautomationssystem weist vorzugsweise eine Gateway- bzw. Haussteuereinheit auf, die mit mindestens einem Feldbus, einer Aggregationseinheit, einer grafischen Oberfläche und einer Programmschnittstelle ausgestattet ist. Wobei die Aggregationseinheit Informationen über an den Feldbus der Gatewayeinheit angeschlossene Geräte aufnimmt, die Informationen miteinander verknüpft und die verknüpften Informationen in Dialogform zur Steuerung der Gebäudeautomation wiedergibt.

Eine Haussteuereinheit im Sinne der Erfindung kann ein Gerät sein wie ein Router oder ein Gatewaygerät, es kann aber auch eine Softwareapplikation sein, die die Funktionalitäten des Gateways simuliert. Die Eigenschaft der Haussteuereinheit besteht im Wesentlichen darin die Teilsysteme der Gebäudesteuerung in Form von Aktoren und Sensoren zu verwalten und maßgeblich zu steuern.

Bei einer Analyse der Anfragen des Nutzers geht das System davon aus, dass die Bedeutung einzelner Vokabeln nicht bekannt ist. Das System lernt daher ständig bei der Benutzung, welche Bedeutung die Vokabeln und Fakten für den Nutzer haben. Dabei können unterschiedliche Vokabeln je nach Nutzer und zwischen mehreren Nutzern gleiche, ähnliche oder auch unterschiedliche Bedeutung haben (Synonyme, Homonyme und Antonyme).

Gelernte Vokabeln und Fakten haben vorzugsweise zu Beginn eine hohe Unschärfe. In wiederholten Abfragen wird das Ergebnis solange neu bewertet, bis eine ausreichend hohe Sicherheit der Interpretation vorliegt. Fehlerhafte Interpretationen, die durch den Nutzer korrigiert werden, erhöhen wiederum die Unschärfe.

Ein Softwaremodulmanagementsystem sorgt vorzugsweise dafür, dass bei Bedarf Softwaremodule zur Laufzeit in das System geladen und auch wieder entfernt werden können. Es gibt im System eine Schnittstelle, die es diesen Softwaremodulen erlaubt, neue Vokabeln und Fakten in das System einzuspeisen und damit das Vokabular des Systems zu erweitern, diese Vokabeln zu verwalten und bei einer Deinstallation des Softwaremoduls diese wieder zu entfernen.

### Kurze Beschreibung der Zeichnungen

Es zeigen:
Fig. 1 eine schematische Darstellung eines Gebäudeautomationssystems gemäß einer Ausführungsform der Erfindung mit selbstorganisierendem Sprachverarbeitungssystem,
Fig. 2 ein schematisches Ablaufdiagramm gemäß einer Ausführungsform eines erfindungsgemäßen Verfahrens,
Fig. 3 ein schematisches Ablaufdiagramm gemäß einer weiteren Ausführungsform eines erfindungsgemäßen Verfahrens,
Fig. 4 eine schematisches Blockdiagramm einer weiteren Ausführungsform der Erfindung,
Fig. 5 eine schematische Darstellung eines Nutzerdialogs gemäß einer weiteren Ausführungsform der Erfindung, und
Fig. 6 eine schematische Darstellung eines weiteren Nutzerdialogs gemäß einer weiteren Ausführungsform der Erfindung.

### Ausführungsbeispiele der Erfindung

Nachfolgend wird die vorliegende Erfindung anhand von Ausführungsbeispielen und der Figuren näher erläutert.

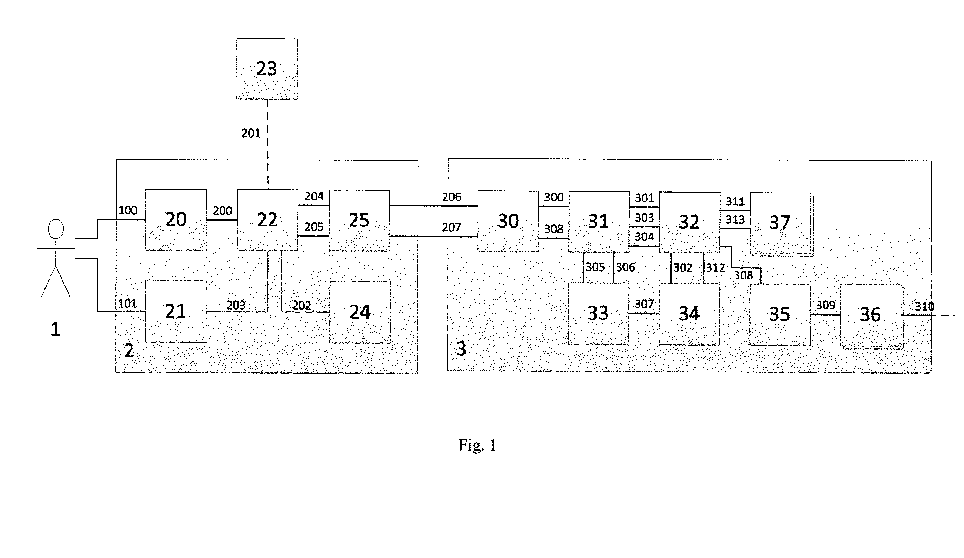

Fig.1 zeigt den schematischen Aufbau eines Gebäudeautomationssystems mit der Einbindung der Elemente der Ontologiesteuerung in die Umgebung des bekannten Gebäudeautomatisierungssystems. Der Nutzer 1 verwendet folgendes System bestehend aus den Komponenten der Aufnahme von Information in Form eines Dialog Ein-/Ausgabegerätes 2 und eines Home Gateways (Haussteuereinheit) 3 zur Gebäudesteuerung. Das Dialog Ein-/Ausgabegerät 2 besteht dabei im Wesentlichen aus einer Dialogaufnahme oder auch Dialog Eingabemodul (z.B. Mikrophon oder Texteingabe) 20, einem Dialogwiedergabemodul (z.B. Lautsprecher oder Textausgabe) 21, einem lokalen Dialoginterpretermodul 22 ggf. mit Hilfe einer Komponente im Netz 23 (z.B. optional mit einem Dialoginterpretermodul in der Cloud), ein lokales Kontextdatenmodul (für Kontextdaten wie Ort des Dialog Ein-/Ausgabegerätes oder auch die Identität des Nutzers) 24, und einer Übertragungs- und Empfangskomponente 25 zur Haussteuerungseinheit 3. Die Dialog Ein-/Ausgabe kann dabei alles umfassen, was geeignet ist sich mit dem Nutzer 1 bzw. mit dem Dialog Ein-/Ausgabemodul 20, 21 zu verständigen, wie Sprache, Text, Gesten, Lichtsignale, Morsen, Klopfen, Berühren usw.

Das Home Gateway (Haussteuereinheit) 3 zur Gebäudesteuerung umfasst erfindungsgemäß eine Übertragungs- und Empfangskomponente 30 der Haussteuerungseinheit 3, ein Dialogkoordinatormodul (Control Agent) 31, ein Kontextverarbeitungsmodul (Context Engine) 32, ein Lernverarbeitungsmodul (Learning Engine) 33, eine Ontologiedatenbank 34, eine Haussteuerungskomponente 35, ein/mehrere Feldbusanschluss / -Anschlüsse 36, und ein oder mehrere Hersteller- und Ergänzungsmodule 37.

Ein wesentlicher Teil des erfindungsgemäßen Systems wird durch die Ontologieverarbeitung gebildet, welche mithilfe des Dialogkoordinatormoduls 31, des Kontextverarbeitungsmoduls 32, des Lernverarbeitungsmoduls 33 und schließlich der Ontologiedatenbank 34 unterstützt wird.

Im Folgenden werden die Datenflüsse zwischen den einzelnen Komponenten in Fig.1 näher beschrieben.
100 = Sprach- bzw. Dialogeingabe durch den Nutzer 1;
101 = Sprach- bzw. Dialogausgabe an den Nutzer 1;
200 = Übergabe Dialogdaten an das Dialoginterpretermodul 22;
201 = Optional: Weitergabe der Dialogdaten an das Dialoginterpretermodul 23 in der Cloud und Empfang der Ergebnisse der Interpretation;
202 = Anreicherung mit weiteren lokalen Kontextdaten, z.B. Ort;
203 = Übergabe Ergebnisdialog an das Dialogwiedergabemodul 21;
204 = Übergabe der interpretierten, angereicherten Dialogdaten an die Übertragungs- und Empfangskomponente 25;
205 = Übergabe der Dialogantwort an das lokale Dialoginterpretermodul 22;
206 = Senden der Dialog- und lokaler Kontextdaten vom Dialog Ein-/Ausgabegerät 2 an das Home Gateway / Haussteuereinheit 3;
207 = Senden des Dialogergebnisses vom Home Gateway / Haussteuereinheit 3 zum Dialog Ein-/Ausgabegerät 2;
   - Dabei kann es sich auch um Nachfragen zur vorherigen Anfrage bzw. Anweisung des Nutzers 1 handeln.
      300 = Übertragen der Dialog- und lokalen Kontextdaten an das Dialogkoordinatormodul 31;
      301 = Übertragen der Dialog- und lokalen Kontextdaten an das Kontextverarbeitungsmodul 32;
      302 = Abfrage bekannter Vokabeln und Fakten aus der Ontologiedatenbank 34;
      303 = Rückgabe des Ergebnisses der Kontextverarbeitung an das Dialogkoordinatormodul 31;
         - Das Ergebnis enthält ggf. Vokabeln, die noch unbekannt sind. Hier kann ggf. im Dialog beim Nutzer 1 nachgefragt werden. In diesem Fall wird durch einen fortgesetzten Dialog mit dem Nutzer 1 das Ergebnis verbessert und neue Vokabeln gelernt, bis entweder der Nutzer 1 den Dialog abbricht oder das System den Dialog vollständig erfasst hat.
         - Das Ergebnis enthält die Akkuranz der Interpretation bzw. Erkennung durch die Kontextverarbeitung.
      304 = Übertragen des Resultats (akzeptiertes Ergebnis bzw. fehlerhafte Interpretation) zur nachhaltigen Bewertung an das Kontextverarbeitungsmodul 32;
      305 = Übergabe unbekannter Vokabeln an das Lernverarbeitungsmodul 33 zur Vorbereitung auf einen Lerndialog mit dem Nutzer 1;
      306 = Übergabe von Ergebnissen eines Lerndialogs an das Lernverarbeitungsmodul 33;
      307 = Speicherung von neu gelernten Vokabeln in der Ontologiedatenbank 34;
      308 = Übertragen von Handlungsanweisungen an die Haussteuerungskomponente 35, bzw. Auslesen von Informationen der Haussteuerungskomponente 35;
      309 = Steuerung der an einen oder mehrere Feldbusse 36 angeschlossenen Hausgeräte, bzw. Auslesen von Informationen;
      310 = Feldbusverbindung(en) zu angeschlossenen Geräten;
      311 = Übertragung von weiteren Fakten und vordefinierten Vokabeln an das Kontextverarbeitungsmodul 32;
   - Hersteller und Drittanbieter können in diesen Modulen eigene Vokabeln vordefinieren und so die Ontologie anreichern.
      312 = Ablegen, Löschen, Bearbeiten von vordefinierten, ergänzenden Vokabeln und Fakten;
      313 = Steuerung der Hersteller- und Ergänzungsmodule 37 durch das Kontextverarbeitungsmodul 32.

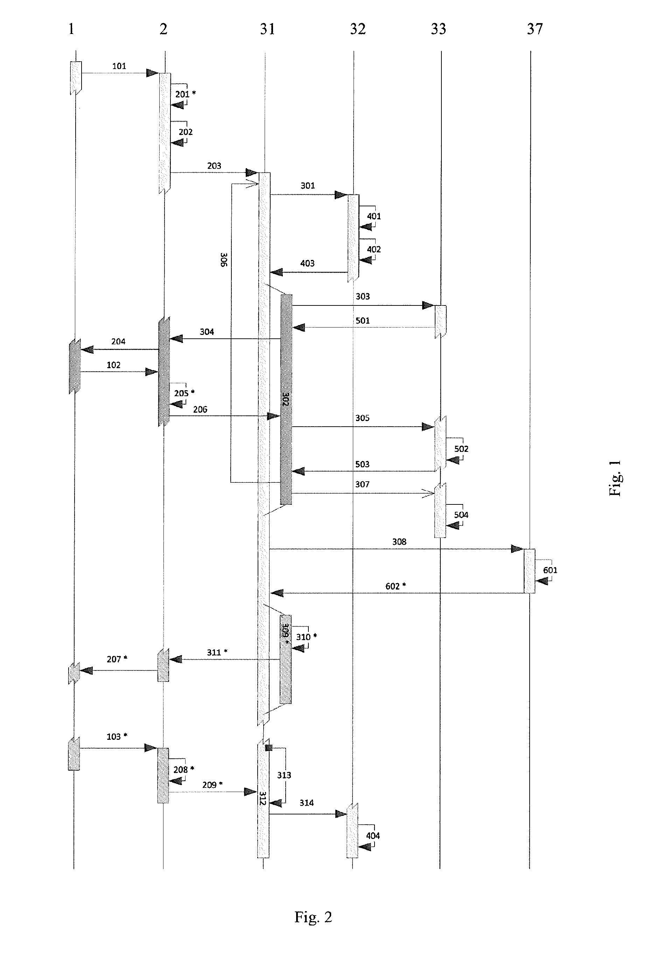

Fig. 2 offenbart den sequenziellen Ablauf der Erkennung von neuen Vokabeln oder Geräten und die Einordnung dieser Vokabeln in die Ontologiedatenbank 34.

Fig. 2 zeigt dabei einen Dialog zwischen dem Nutzer 1 und dem Dialog Ein-/Ausgabegerät 2, welches zur Eingabe und Ausgabe des Dialogs durch den Nutzer 1, mittels des Dialog Ein-/Ausgabemoduls 20, 21, verwendet wird. Durch das Dialog Ein-/Ausgabegerät 2 können weitere Kontextinformationen zum Dialog als Metadaten hinzugefügt werden, z.B. die Identität des Nutzers 1, der Aufenthaltsort oder ähnliches. Ferner zeigt Fig. 2 die Dialoge mit dem Dialogkoordinatormodul 31, dem Kontextverarbeitungsmodul 32, dem Lernverarbeitungsmodul 33, und 3rd Party Modulen (Ergänzungsmodulen) 37.

Das Dialogkoordinatormodul 31 befindet sich auf dem Home Gateway 3 und koordiniert die verschiedenen Datenflüsse, die während eines Dialogs stattfinden. Das Kontextverarbeitungsmodul 32 kommuniziert mit der Ontologiedatenbank 34 (hier nicht dargestellt) zur Interpretation des Dialoges. Das Lernverarbeitungsmodul 33 erarbeitet die Teile eines Dialogs, die dazu notwendig sind, offene Vokabeln und Fakten zusammen mit dem Nutzer 1 zu lösen. Das Lernverarbeitungsmodul 33 wird auch dann eingesetzt, wenn ein Dialog zwar nicht mehr offen ist, aber die Akkuranz für die Interpretation noch nicht ausreichend ist. Das Lernverarbeitungsmodul 33 legt neue Erkenntnisse, die aus Lerndialogen entstehen, in der Ontologiedatenbank 34 ab. Die 3rd Party - Module 37 können sowohl Softwarekomponenten als auch Programmmodule (Hardwarekomponenten) sein, die durch ein hier nicht näher beschriebenes System in das Home Gateway 3 nachgeladen werden können, um die Funktionalität zu erweitern. Es wird angenommen, dass die hier dargestellten 3rd Party - Module 37 auch für die Steuerung und die Abfrage von weiteren Komponenten und Informationen dienen. Dieses können Bestandteile einer Heimautomatisierungslösung (Anschluss, Abfrage und Steuerung von Aktoren und Sensoren) sein oder auch die Steuerung und Abfrage von externen Daten aus dem Internet (z.B. Wetterdaten) oder Berechnungen jeglicher Form sein. 3rd Party-Module 37 können das Vokabular einer Ontologiedatenbank 34 erweitern, indem sie bei einer Aktivierung neue Vokabeln und Fakten hinzufügen. Diese Vokabeln und Fakten können bei einer Deaktivierung eines 3rd Party - Moduls 37 auch wieder entfernt werden. Ein Beispiel für eine Ausführungsumgebung auf Home Gateways 3, die ein Management von 3rd Party - Modulen 37 ermöglicht, ist OSGi, s. http://www.osgi.org.

Der sequenziellen Ablauf der Erkennung von neuen Vokabeln oder Geräten und die Einordnung dieser Vokabeln in die Ontologiedatenbank 34 läuft im Wesentlichen so ab, dass ein Nutzer 1 eine Anfrage an das Dialog Ein-/Ausgabegerät 2 stellt. Das Dialog Ein-/Ausgabegerät 2 umfasst ein Modul zur Spracherkennung. Ferner werden die Daten und Kontextdaten durch das Dialog Ein-/Ausgabegerät 2 angereichert und an das Home Gateway 3 mit dem Dialogkoordinatormodul 31 übertragen. Das Dialogkoordinatormodul 31 verwendet diese Anfrage und fragt nun die Ontologiedatenbank 34 in dem Kontextverarbeitungsmodul 32 nach einer Bewertung und Interpretationen und erhält ein Anfrageergebnis.

Kann die Anfrage des Nutzers 1 in der Ontologiedatenbank 34 nicht zugeordnet werden, wird ein Lerndialog eingefordert. Der Lerndialog sieht nun vor, dass über das Dialog Ein-/Ausgabegerät 2, dem Nutzer 1 Fragen gestellt werden, so dass die Antworten des Nutzers 1 an das Dialogkoordinatormodul 31 zurück gemeldet werden und neue Zusammenhänge in der Ontologiedatenbank 34 durch das Lernelement (Lernverarbeitungsmodul 33) aufbereitet werden und eingefügt werden, deren Resultate durch das Kontextverarbeitungsmodul 32 in die Onthologiedatenbank 34 eingeführt werden. Wurde die Ontologie richtig zugeordnet, und konnte damit das zu bedienende Gerät identifiziert werden, werden die Daten zur Bedienung des Gerätes an die Gerätesteuerung weitergeleitet. Über das Dialog Ein-/Ausgabegerät 2 wird dem Nutzer 1 die Ausführung der Steuerbefehle quittiert.

Ferner ist es auch möglich, dass Drittherstellermodule 37, z.B. neue Gerätetreiber, Änderungen in der Onthologiedatenbank 34 notwendig machen. In diesem Falle wird die Aktion nicht von dem Nutzer 1 oder dem Dialog Ein-/Ausgabegerät 2 ausgehen, sondern von dem Home Gateway 3 wird eine Ausgabe an das Dialog Ein-/Ausgabegerät 2 gerichtet, und der Nutzer 1 wird so auf die Einrichtung des neuen Gerätetreibers aufmerksam gemacht. Die neuen Ontologiedaten werden von der Onthologiedatenbank 34 iterativ erlernt. Ist dieses abgeschlossen, erhält der Nutzer 1 für jede erfolgreiche Benutzung der Gerätetreiber-Funktionen eine positive Bestätigung durch das Dialog Ein-/Ausgabegerät 2.

Einige der Komponenten aus Fig. 1 werden der Übersichtlichkeit halber in Fig. 2 nicht explizit dargestellt, sind aber an der Dialogverarbeitung beteiligt. Dieses sind z.B. die Ontologiedatenbank 34, die Sprachanalyse im Netz 23 oder Infrastrukturkomponenten zur Datenübertragung.

Im Folgenden werden Beispiele für die Datenflüsse und Funktionsaufrufe zwischen den einzelnen Komponenten in Fig. 2 näher beschrieben.

### Nutzer (1)

101 = Anfrage durch den Nutzer 1;
   - Dabei kann es sich um eine gesprochene Anfrage handeln, z.B. ähnlich wie bei Siri/Apple iPhone oder um eine Anfrage durch eine Texteingabe o.ä.
      102 = Beantwortung des Lerndialogs durch den Nutzer 1;
      103 = Optionale Bewertung des letzten Dialogs durch den Nutzer 1;
   - Dieses kann z.B. durch einen positiven oder negativen Kommentar erfolgen (s.a. (312)).

### Dialog Ein-/Ausgabegerät (2)

201 = Optionale Sprachverarbeitung am Dialog Ein-/Ausgabegerät 2;
   - Diese Verarbeitung kann auf beliebige Art und Weise geschehen und ist abhängig von der jeweilig verwendeten Technologie.
202 = Anreicherung mit lokalen Kontextdaten;
   - Die Dialogdaten werden hier mit lokalen Kontextdaten angereichert. Dabei kann es sich z.B. um die Identität des Nutzers 1, seinen Namen oder um seinen aktuellen Aufenthaltsort handeln.
203 = Übertragung der Dialogdaten an das Dialogkoordinatormodul 31 auf dem Home Gateway 3;
   - Hier werden die auf dem Dialog Ein-/Ausgabegerät 2 aufbereiteten und angereicherten Dialogdaten an das Home Gateway 3 zur Interpretation und zur Verarbeitung übertragen.
204 = Präsentation eines Lerndialogs für den Nutzer 1;
205 = Optionale Sprachverarbeitung am Dialog Ein-/Ausgabegerät 2 (s. (201));
206 = Übertragung der Antwort(en) zu einem Lerndialog;
207 = Optionale Präsentation der Dialogergebnisse an den Nutzer 1;
208 = Optionale Sprachverarbeitung am Dialog Ein-/Ausgabemodul 2 (s. (201));
209 = Optionale Übertragung der Dialogbewertung.

### Dialogkoordinatormodul (31)

301 = Übertragung der Dialogdaten an das Kontextverarbeitungsmodul 32;
302 = Nachfrage notwendig?
   - Je nach Akkuranz des Ergebnisses der Kontextverarbeitung ist es unter Umständen notwendig, den Nutzer 1 in einem erweiterten Dialog nach der Bedeutung, Ort, o.ä. Charakteristika einzelner noch unbekannter Geräte oder Sachverhalte zu fragen.
   - Zum Beispiel kann der Nutzer 1 danach gefragt werden, an welchem Schaltaktor einer Heimvernetzungseinrichtung eine Lampe angeschlossen ist, oder in welchem Raum sich ein Gegenstand befindet.
   - Ist die Akkuranz ausreichend hoch, können die Schritte (102, 204 - 206, 302 - 307, 403, 501 - 504) entfallen.
303 = Lerndialog anfragen;
   - Hier wird die ungenügend genaue Dialoginterpretation an das Lernverarbeitungsmodul 33 übergeben, damit dieses einen oder mehrere Dialoge erstellen kann, mit denen zusammen mit dem Nutzer 1 die fehlenden Vokabeln ergänzt werden können.
   - Weiter kann bei einer geringen Akkuranz das gefundene Ergebnis noch einmal durch den Nutzer 1 bestätigt oder korrigiert werden.
304 = Übertragung eines Lerndialogs für den Nutzer 1 an das Dialog Ein-/Ausgabegerät 2;
305 = Rückgabe der Antwort(en) zu einem Lerndialog an das Lernverarbeitungsmodul 33;
306 = Erneute Verarbeitung des Dialogs anhand der neuen oder genaueren Vokabeln und Fakten;
   - Der Lerndialog kann öfter wiederholt werden, falls noch keine ausreichende Genauigkeit erreicht wurde, das Ergebnis widersprüchlich ist oder weiterhin unbekannte Vokabeln im Dialog vorhanden sind.
307 = Ist der Dialog ausreichend vollständig erfasst und die Genauigkeit bestätigt, geschieht hier eine Ergebnisbewertung;
   - Wurde der Dialog ursprünglich bereits vollständig erkannt und war nur die Genauigkeit nicht ausreichend, wird an dieser Stelle die Akkuranz des Ergebnisses positiv bewertet, wenn der Nutzer 1 das Ergebnis bestätigt. Wenn der Nutzer 1 das Ergebnis nicht bestätigt bzw. korrigiert, wie die Akkuranz negativ bewertet.
   - Diese Aktion kann nebenläufig geschehen. Es wird hier kein Ergebnis erwartet.
      308 = Aktionsanfrage an ein 3rd Party - Modul 37;
   - Nach der Interpretation eines Dialoges werden ein oder mehrere 3rd Party - Module 37 angesprochen, um entsprechende Aktionen auszulösen, z.B. das Einschalten eines Aktors, der über ein bestimmtes 3rd Party - Modul 37 erreichbar ist.
      309 = Optionale Dialogverarbeitung eines Ergebnisses;
   - Abhängig von (602) wird das Ergebnis einer Dialoganfrage an den Nutzer 1 zurückgegeben.
      310 = Optionale Aufbereitung eines Ergebnisdialogs;
   - An dieser Stelle wird das optionale Ergebnis einer Aktion auf Grund eines Dialogs für den Nutzer 1 als Dialogantwort aufbereitet.
      311 = Optional Übertragung einer Dialogantwort;
   - Der aufbereitete Dialog wird geeignet an das Dialog Ein-/Ausgabegerät 2 übertragen
      312 = Letzten Dialog bewerten;
   - Am Ende wird die Qualität bzw. die Akkuranz des Dialogs und der Interpretation bewertet.
   - Dabei wird davon ausgegangen, dass ein Dialog, der vom Nutzer 1 nicht schlecht bewertet wird, eine positive Bewertung erhält. Diese ist allerdings nicht gleichwertig zu setzen mit einer aktiven Bewertung durch den Nutzer 1.
      - Wie die Bewertung durch den Nutzer 1 erfolgt, ist hier nicht vorgegeben. Es kann aber durch Kommentare erfolgen, wie z.B. "Das war richtig" oder "Das war falsch".
313 = Timeout aktivieren;
   - Zu Beginn wird ein Zeitgeber gestartet, der für eine vorgegebene Zeit aktiv ist. Innerhalb dieses Zeitraums wird eine Bewertung durch den Nutzer 1 akzeptiert.
   - Nach Ablauf des Zeitgebers erfolgt eine Bewertung.
314 = Übergabe der Dialogbewertung an das Kontextverarbeitungsmodul 32.

### Kontextverarbeitungsmodul (32)

401 = Abfrage Ontologiedatenbank 34;
   - Zur Erkennung des Kontexts, d.h. der involvierten Komponenten und die zugehörigen Aktionen werden bekannte Vokabeln aus der Ontologiedatenbank 34 abgefragt.
402 = Interpretation & Bewertung;
   - Die erkannten Vokabeln und Zusammenhänge werden hier interpretiert, bewertet und das Ergebnis oder Teile davon mit einem Genauigkeitswert (Akkuranz) versehen.
   - Dabei werden die zusätzlichen Metadaten aus den Dialogdaten zur Hilfe herangezogen, z.B. der Name oder die Identität des Nutzers 1.
403 = Rückgabe des Anfrageergebnisses an das Dialogkoordinatormodul 31;
404 = Ablage der Bewertung in der Ontologiedatenbank 34.

### Lernverarbeitungsmodul (33)

501 = Rückgabe eines Lerndialogs für den Nutzer 1;
   - Auf Basis unvollständiger oder ungenauer Erkennung.
502 = Auswertung der Antwort(en) eines Lerndialogs und Ablage der Ergebnisse und Erkenntnisse in der Ontologiedatenbank 34;
503 = Rückgabe des neuen, aktualisierten Dialogergebnisses;
504 = Ablage der Bewertung des Lernergebnisses in der Ontologiedatenbank 34;

### 3rd Party Modul (37)

601 = Auslösen einer Funktion, Berechnung, etc.;
602 = Optionale Rückgabe eines Ergebnisses;
   - Je nach gewünschter Funktion kann eine Aktion oder Anfrage ein Ergebnis haben.
   - Hier ist nicht dargestellt, wie das zeitliche Verhalten der Funktion aus (601) ist und wie auf das Ergebnis gewartet wird. Vorstellbar sind hier beispielsweise Polling oder ein Ereignismechanismus.

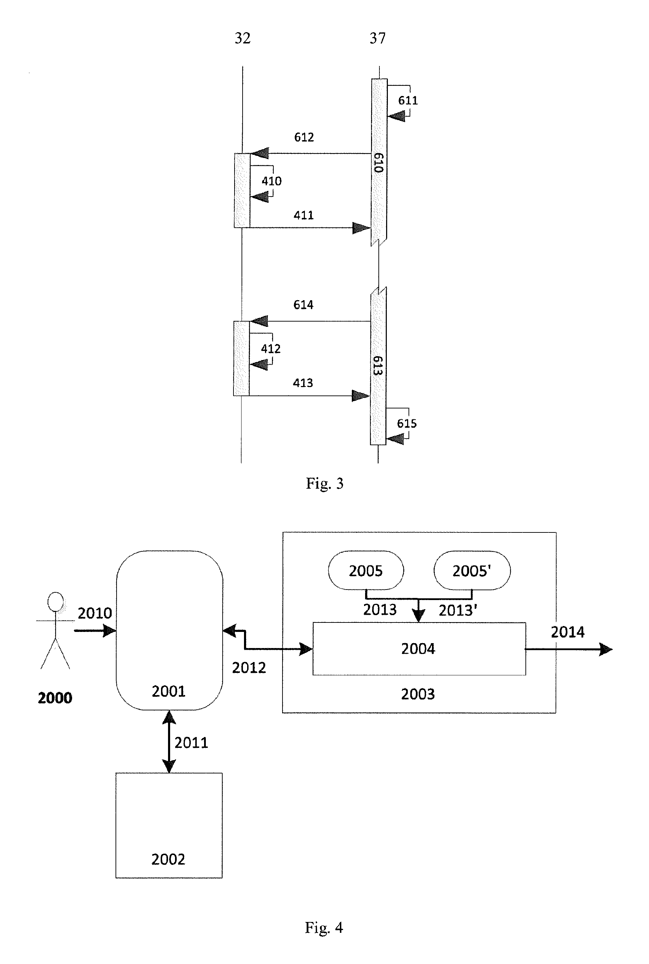

Fig. 3 stellt nun den sequentiellen Ablauf der Installation bzw. der Deinstallation eines Drittherstellermoduls 37 dar. Dabei werden neue Vokabeln in das System eingespeist bzw. wieder aus diesem entfernt.

Die hier aufgelisteten Komponenten (Kontextverarbeitungsmodul 32, 3rd Party Modul 37) sind logisch identisch mit den beschriebenen Komponenten beim Sequenz - Dialogablauf in Fig. 2. Die Erklärungen zu den Komponenten sind dort zu finden.

Die Datenflüsse von Fig. 3 werden im Folgenden beschrieben.

### Kontextverarbeitungsmodul (32)

410 = Ablage (Speicherung bzw. Registrierung, d.h. vorübergehende Speicherung) der Vokabeln und Fakten des 3rd Party - Moduls 37 in der Ontologiedatenbank 34;
   - Hierbei wird geprüft, ob es Überschneidungen oder Widersprüche mit bereits vorhandenen Einträgen in der Ontologiedatenbank 34 gibt. Hierbei sind zur Lösung solcher Konflikte unterschiedliche Strategien vorstellbar, zum Beispiel:
      - Alte Einträge werden überschrieben.
      - Alte Einträge werden nicht überschrieben.
      - Gleiche Einträge werden markiert und gesondert, aber gleichwertig behandelt. Bereits existierende Bewertungen alter Einträge werden für die neuen Einträge übernommen.
      - Neue Einträge führen zu einer Neubewertung bereits existierende Einträge.
   - Eine Option ist, gleiche Vokabeln und Fakten parallel zu verwalten. Eine Festlegung der Priorität gegenüber bereits vorhandenen Vokabeln und Fakten erfolgt dann durch das Kontextverarbeitungsmodul 32.
411 = Bestätigung oder Fehlermeldung der Ablage der Vokabeln und Fakten des 3rd Party - Moduls 37;
412 = Entfernen der Vokabeln und Fakten des 3rd Party - Moduls 37 aus der Ontologiedatenbank 34;
   - Hierbei wird vorzugsweise der alte Zustand der Ontologie vor dem Hinzufügen der Vokabeln und Fakten aus (410) für das zu entfernende 3rd Party - Modul 37 wieder herzustellen. Je nach angewendeten Verfahren aus (410) wird die Wiederherstellung nicht vollständig erreicht werden können.
   - Besonders bevorzugt ist, dass die Vokabeln und Fakten, die ausschließlich vom zu entfernendem 3rd Party - Modul 37 eingebracht wurden, nach dem Entfernen nicht mehr vorhanden sind.
   - Optional können die bisherigen Bewertungen für die Akkuranz der Vokabeln und Fakten des 3rd Party - Moduls 37 aufbewahrt werden für den Fall, dass dieses 3rd Party - Modul 37 in der Zukunft erneut installiert wird.
413 = Bestätigung oder Fehlermeldung über das Entfernen der Vokabeln und Fakten des 3rd Party - Moduls 37.

### 3rd Party Modul (37)

610 = Ablauf der Installation bzw. Aktivierung eines 3rd Party - Moduls 37;
611 = Technische Installation bzw. Aktivierung eines 3rd Party - Moduls 37;
612 = Anmeldung der Vokabeln und Fakten des 3rd Party - Moduls 37 an dem Kontextverarbeitungsmodul 32;
613 = Ablauf der Deinstallation bzw. Deaktivierung eines 3rd Party - Moduls 37;
614 = Abmeldung der Vokabeln und Fakten des 3rd Party - Moduls 37 an dem Kontextverarbeitungsmodul 32;
615 = Technische Deinstallation bzw. Deaktivierung eines 3rd Party - Moduls 37.

Wie oben beschrieben wird erfindungsgemäß ein System zur Gebäudeautomationssystem mit einer Haussteuereinheit 3, welches mit mindestens einem Feldbus 36, eine Aggregationseinheit, einer grafischen Oberfläche und einer Programmschnittstelle ausgestattet ist. Das System besitzt ein Grundvokabular und ein hinzugelerntes Vokabular, wobei das hinzugelernte Vokabular einen unscharfen Kontext zu dem Grundvokabular aufweist und durch bestätigende Antworten des Nutzers 1 in einen zutreffenden Kontext gestellt wird.

In dem beschriebenem System zur Gebäudeautomation kann die Aggregationseinheit Informationen über die an den Feldbus der Gatewayeinheit angeschlossenen Geräte aufnehmen, die Informationen miteinander verknüpfen und die verknüpften Informationen in Dialogform zur Steuerung der Gebäudeautomation in einer Ontologiedatenbank weiterverarbeiten.

Das System zur Gebäudeautomation kann ferner für jedes angeschlossenen Geräte ein Element in einer Ontologiedatenbank anlegen, Steuerzustände diesen Elementen zuordnet und die Verknüpfung der Steuerzustände mit einer hinterlegten Liste von Attribute des Elements in Dialogform selbststätig mit Regeln verknüpfen.

Die Informationen über angeschlossene Geräte können sich aus Informationen über die Geräte, und Informationen über Kontextmetadaten aus der Wechselwirkung der Geräte mit ihrer Umwelt zusammensetzen.

Das System kann dabei ein generisches Vokabulars aufweisen, welches aufgrund der Informationen und Metadaten die Ontologiedatenbankelemente über die Geräte dynamisch angepasst werden kann.

Weiterhin können die an den Feldbus angeschlossenen Geräte Sensoren zur Aufnahme ihrer Umgebung und des Kontext in ihrer Umwelt aufweisen.

Wie oben beschrieben umfasst die vorliegende Erfindung ebenfalls ein Verfahren zur Gebäudeautomation, wobei ein Ontologiemodell gebildet wird, welches ein generisches Vokabular und welches die dynamischen Metadaten einbindet, wobei das Kontextmodell durch einen Dialog über eine graphische Bedienungsoberfläche angepasst wird.

Der Dialog zur Anpassung des Kontextmodells kann dabei als eine Benutzerführung in Form von Fragen und Anweisungen aufweisen, wobei die Bezeichnung der fehlenden Elemente durch eine Priorisierung und Bewertung des Vokabulars nach Gebäudeautomation relevanten Daten wie Energieverbrauch, Standort, Anwendungshäufigkeit vorgenommen wird.

Dem Verfahren zur Gebäudeautomation kann dabei die Identität des Nutzers bekannt sein, und synonyme, homonyme und antonyme Vokabeln können erkannt werden.

Ferner kann die Ontologiedatenbank zur Laufzeit des Programmes durch nachladbare Daten um fachspezifische Vokabeln erweitert werden, und diese Vokabeln können zu einem späteren Zeitpunkt wieder entfernt werden.

Fig. 4 stellt eine beispielhafte Integration der vorliegenden Erfindung in ein System zur Haussteuerung dar. Fig. 4 zeigt einen Nutzer 2000, ein Mobiltelefon 2001 mit Applikation (Anwendung) zur Spracherkennung und optionaler Kommunikation mit einem Sprachserver 2002 zur Steuerung der Haussteueranlage 2003. Weiterhin zeigt Fig. 4 eine Haussteueranlage 2003 mit einer Laufzeitumgebung 2004 und nachladbaren Anwendungen 2005, 2005'. Ein Beispiel für ein derartiges System stellt das Qivicon API X.0 Home Base dar.

Das Home Gateway (Heimsteuereinheit 2003) Qivicon API X.0 bildet die Basis für Heimautomationsdienste unterschiedlicher Hersteller und Standards. Diese Systeme werden über Schnittstellen (API) an das Home Gateway 2003 angeschlossen. Dieses geschieht bevorzugt über Applikationen (Anwendungen 2005, 2005'). Die Home Gateway Plattform 2003 kann seinerseits über das Mobiltelefon 2001 angesprochen werden. Das Mobiltelefon 2001 bietet dabei verschiedene Dienste an, darunter die Steuerung des Home Gateways 2003 über Sprachbefehle. Das Home Gateway 2003 sendet Anweisungen und Anfragen zur Darstellung von Kommandos an das Mobiltelefon 2001. Dem Nutzer 2000 werden diese Anweisungen und Informationen grafisch und/ oder in gesprochen Sätzen präsentiert.

Gemäß einer Ausführungsform der vorliegenden Erfindung wird eine Eingabe z.B. ein Sprachkommando durch den Benutzer an das Mobiltelefon 2001 übermittelt (2010) und in dem Mobiltelefon 2001 verarbeitet. Es ist nicht zwingend notwendig, dass die Sprachverarbeitung dabei ausschließlich auf dem Mobilfunkgerät 2001 oder auf dem Home Gateway 2003 erfolgt. Vielmehr, kann auch ein Spracherkennungsdienst auf einem Sprachserver 2002 eingesetzt werden, der außerhalb dieser Infrastruktur ist (2011). Dessen Aufgabe besteht vornehmlich darin, Sprachsignale in maschinenlesbare Textzeichen (Text oder Token Tree) umzuwandeln. Die analysierte Spracheingabe wird nun von dem Mobiltelefon 2001 an die Haussteueranlage 2003 zur weiteren Analyse und Verarbeitung übermittelt (2012). Je nach Notwendigkeit kann hier ein Dialog bzw. eine weiterer Nachfrage an den Nutzer initiiert werden. Die Aufgabe des Home Gateways 2003 besteht vornehmlich darin, Daten aus dem Home Automation Systems mittels der Kontextdaten der Ontologiedatenbank aufzubereiten und die Daten, Befehle und Anweisungen an das Mobilfunkgerät 2001 weiterzuleiten und/oder Anweisungen zu empfangen.

Die Registrierung (Installation) von neuen Vokabeln und Wissen durch nachladbare Anwendungen (2005, 2005') ist in Fig. 4 durch die Verbindung 2013, 2013' angedeutet. Wird ein Steuerbefehl erkannt wird das entsprechende angeschlossene Hausgerät (nach Erkennung und Interpretation des Sprachkommandos 2010) gesteuert (2014).

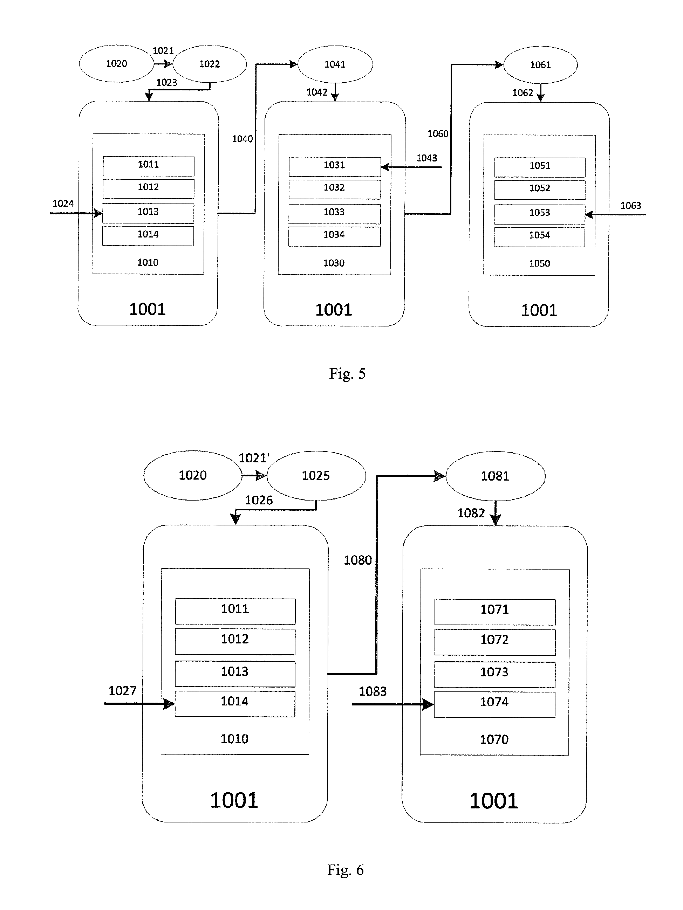

Fig. 5 zeigt beispielhaft eine Anlernphase (Lerndialog) für ein Heimgerät, welches zum ersten Mal mit dem Netzwerk verbunden wird. Das Gerät ist hier beispielsweise eine "Leselampe am Sofa". Fig. 5 zeigt das Dialoggerät 1001, z.B. ein Mobiltelefon mit Applikation. Nach einer Dialogeingabe 1020 durch den Benutzer (zum Beispiel: "Leselampe am Sofa einschalten"), folgt eine Analyse 1021 der Eingabe mit dem Resultat, dass eine Nachfrage beim Nutzer erforderlich ist. Entsprechend der vorliegenden Erfindung wird daraufhin eine Rückfrage 1022 an den Benutzer gerichtet (zum Beispiel: "Was ist eine Leselampe?"). Daraufhin wird ein Menü 1010 mit Optionen für den Nutzer an das Mobiltelefon 1001 gesendet 1023 und auf dem Mobiltelefon 1001 angezeigt. In diesem Beispiel könnten die angezeigten Menüeinträge 1011-1014 lauten:
- 1011 "Begriff bezeichnet einen Ort";
- 1012 "Begriff bezeichnet ein vernetztes Gerät";
- 1013 "Begriff bezeichnet ein unvernetztes Gerät";
- 1014 "Begriff bezeichnet eine anderes Objekt".

Nun hat der Nutzer die Gelegenheit eine Auswahl 1024 der richtigen Antwort auf die Frage zu tätigen (zum Beispiel 1013 "Begriff bezeichnet ein unvernetztes Gerät").

Diese Eingabe durch den Nutzer wird nun erneut analysiert 1040. Im vorliegenden Beispiel wird festgestellt, dass eine weitere Rückfrage 1041 nötig ist (z.B. 1042 "Welche Art von Gerät ist Leselampe?"). Daraufhin wird dem Nutzer ein neuerliches Menü 1030 mit Optionen zur genaueren Bestimmung der Art des Begriffs angezeigt. In diesem Beispiel könnten die angezeigten Menüeinträge 1031-1034 zum Beispiel lauten:
- 1031 "Begriff ist von der Art Licht";
- 1032 "Begriff ist von der Art Thermostat";
- 1033 "Begriff ist von der Art Sensor";
- 1034 "Begriff ist von der Art Anderes".

Der Nutzer hat jetzt erneut die Möglichkeit eine Auswahl 1043 der richtige Antwort unter den Vorschlägen auszusuchen (z.B. 1031 "Begriff ist von der Art Licht").

Diese Eingabe durch den Nutzer wird nun erneut analysiert 1060. Im vorliegenden Beispiel wird festgestellt 1061, dass es sich um ein nicht-vernetztes Gerät (Licht) handelt. Daher muss es indirekt mittels eines anderen, vernetzten Gerätes gesteuert werden. Daraufhin wird eine erneute Rückfrage an den Nutzer formuliert (z.B. 1062 "Durch welches Gerät ist 'Leselampe' erreichbar/steuerbar?").

Dabei werden dem Nutzer im Menü 1050 Optionen zur genaueren Bestimmung eines zu steuernden Gerätes, z.B. die Seriennummer oder ein anderes identifizierendes Merkmal angezeigt. Die verschiedenen Seriennummern werden dann in den Menüeinträgen 1051-1054 zur Auswahl bereitgestellt. Der Nutzer wählt z.B. mit der Auswahl 1063 den Menüeintrag 1053 und hat somit das Gerät eindeutig identifiziert und das Gerät kann in sogleich oder in der Zukunft ohne Rückfragen verwendet werden.

In Fig. 6 ist nun ein Beispiel für einen weiteren Lerndialog dargestellt, wobei das Objekt (z.B. ein Sofa) kein elektrisches Gerät ist. Ähnlich zu dem in Fig. 5 beschriebenem Beispiel beginnt der Prozess mit einer Eingabe am Dialog Ein-/Ausgabegerät 1020. Die Analyse stellt fest, dass eine Rückfrage notwendig ist und übermittelt dies an die Lernverarbeitung 1021' welche die Rückfrage 1025 an den Nutzer vorbereitet (z.B. "Was ist ein Sofa?"). Daraufhin kann dem Nutzer wieder die Möglichkeit gegeben werden aus einem Menü 1010, das an das Mobiltelefon 1001 übermittelt 1026 wird, aus verschiedenen Möglichkeiten (Menüeinträgen) 1011-1014 auszuwählen 1027 (z.B. 1014 "Begriff bezeichnet eine anderes Objekt").

Diese Eingabe durch den Nutzer wird nun erneut analysiert 1080. Im vorliegenden Beispiel wird festgestellt, dass eine weitere Rückfrage 1081 nötig ist (z.B. 1082 " "Wo befindet sich Sofa?"). Daraufhin wird dem Nutzer ein neuerliches Menü 1070 mit Optionen zur genaueren Bestimmung der Art des Begriffs angezeigt. In diesem Beispiel könnten die angezeigten Menüeinträge 1071-1074 zum Beispiel lauten:
- 1071 : Menüeintrag "Küche";
- 1072 : Menüeintrag "Flur";
- 1073 : Menüeintrag "Schlafzimmer";
- 1074 : Menüeintrag "Wohnzimmer".

Der Nutzer hat jetzt erneut die Möglichkeit die richtige Antwort unter den Vorschlägen auszuwählen 1083 (z.B. 1074 "Wohnzimmer"). Damit konnte das System den Begriff Sofa und gleichzeitig den Standort des Objekts "Sofa" lernen.

Während die vorliegende Erfindung hier unter Bezug auf ihre bevorzugten Ausführungsformen beschrieben und dargestellt wurde, ist für Fachleute auf dem Gebiet offensichtlich, dass verschiedene Modifikationen und Änderungen daran vorgenommen werden können, ohne den Schutzbereich der Erfindung zu verlassen. Auf diese Weise ist beabsichtigt, dass die vorliegende Erfindung die Modifikationen und Änderungen dieser Erfindung abdeckt, sofern sie in den Schutzbereich der beigefügten Patentansprüche und ihrer Äquivalente fallen.

## Patentansprüche

1. Verfahren zur Steuerung eines Systems zur Gebäudeautomation, wobei das Verfahren folgende Schritte aufweist:
(a) Empfangen und/oder Senden von Dialogdaten durch ein Dialogkoordinatormodul von bzw. an ein Dialog Ein- Ausgabemodul;
(b) Vergleichen der Dialogeingaben durch ein Kontextverarbeitungsmodul mit bekannten Vokabeln und Kontextdaten in einer Ontologiedatenbank;
(c) Interpretieren und Bewerten von erkannten und/oder nicht erkannten Vokabeln und/oder Kontextdaten durch das Kontextverarbeitungsmodul, wobei das Kontextverarbeitungsmodul einen Genauigkeitswert für das Vergleichsergebnis aus Schritt (b) vergibt und diesen in der Ontologiedatenbank speichert;
(d) Vergleichen des in Schritt (c) vergebenen Genauigkeitswertes mit einem vorher festgelegten Schwellwert durch das Kontextverarbeitungsmodul;
(e1) Initiieren mindestens eines Lerndialogs mit dem Nutzer durch ein Lernverarbeitungsmodul falls das Kontextverarbeitungsmodul feststellt, dass der Genauigkeitswert unterhalb des vorher festgelegten Schwellwerts liegt, wobei der Lerndialog geeignet ist den Genauigkeitswert des Vergleichsergebnisses zu erhöhen oder zu verringern,
(e2) Verarbeiten des Lerndialogs durch das Lernverarbeitungsmodul und Speichern von neu gelernten Vokabeln und/oder Kontextdaten in der Ontologiedatenbank, wobei die Schritte (b) bis (d) von dem Kontextverarbeitungsmodul solange erneut ausgeführt werden bis das Kontextverarbeitungsmodul feststellt, dass der Genauigkeitswert des Vergleichsergebnisses größer als der vorher festgelegte Schwellwert ist; und
(f) Ausgeben von Steuerbefehlen zum Steuern von mit dem System verbundenen Geräten sobald das Kontextverarbeitungsmodul feststellt, dass der Genauigkeitswert des Vergleichsergebnisses größer als der vorher festgelegte Schwellwert ist.

2. Verfahren nach Anspruch 1, wobei das Lernverarbeitungsmodul eine Bewertung des Lerndialogs durchführt und die Bewertung in der Ontologiedatenbank speichert.

3. Verfahren nach Anspruch 1 oder 2, mit den Schritten:
(a1) Verarbeiten von Dialogeingaben eines Nutzers durch das Dialog Ein-/Ausgabemodul zu Dialogdaten;
(a2) Übertragen der Dialogdaten von dem Dialog Ein-/Ausgabemodul an das Dialogkoordinatormodul.

4. Verfahren nach Anspruch 1, wobei die Dialogeingaben mindestens eine der folgenden Eingaben aufweisen: Spracheingaben, Texteingaben, Gesteneingaben, Berührungseingaben, Geräuscheingaben, Morseeingaben.

5. Verfahren nach einem der Ansprüche 1 bis 4, wobei in der Ontologiedatenbank zu den bekannten Vokabeln die zugehörigen Steuerbefehle und Netzwerkadressen der zu steuernden Geräte als Kontextdaten gespeichert sind.

6. Verfahren nach Anspruch 5, wobei das Verarbeiten der Dialogeingaben des Nutzers durch das Dialog Ein-/Ausgabemodul in Schritt (a1) ferner einen Schritt zum Anreichern der Dialogeingaben durch Kontextdaten, mit Hilfe eines lokalen und/oder externen Dialoginterpretermoduls, aufweist.

7. Verfahren nach einem der Ansprüche 1 bis 6, wobei der Lerndialog in Schritt (e1) folgende Schritte aufweist:
(e1.1) Übermitteln des Lerndialogs durch das Lernverarbeitungsmoduls an das Dialog Ein-/Ausgabemodul;
(e1.2) Ausgeben des Lerndialogs als Dialogausgaben durch das Dialog Ein-/Ausgabemodul;
(e1.3) Verarbeiten von Dialogeingaben des Nutzers als Antwort auf die Dialogausgabe in Schritt (e1.2);
(e1.4) Übertragen der Dialogdaten an das Dialogkoordinatormodul; und
(e1.5) Zurückgeben der Dialogdaten an das Lernverarbeitungsmodul.

8. Verfahren zum Installieren von Ergänzungsmodulen, vorzugsweise in einem Verfahren nach einem der Ansprüche 1 bis 7, wobei die Installation von Ergänzungsmodulen die folgenden Schritte aufweist:
(g) Installieren des Ergänzungsmoduls;
(h) Übertragen und Speichern vorzugsweise vorrübergehendes Speichern von neuen Vokabeln und/oder Kontextdaten in einer Ontologiedatenbank;
(i) Überprüfen von Überschneidungen oder Widersprüchen der neuen mit alten Vokabeln und/oder Kontextdaten in der Ontologiedatenbank;
(j) Beheben von Überschneidungen oder Widersprüchen durch vorherbestimmte Regeln in der Ontologiedatenbank; und
(k) Bestätigen oder Melden von Fehlern über die neuen Vokabeln und/oder Kontextdaten an das Ergänzungsmodul.

9. Verfahren nach Anspruch 8, wobei das Beheben von Überschneidungen oder Widersprüchen in Schritt (j) durch Überschreiben von alten Vokabeln und/oder Kontextdaten oder durch Markieren von gleichen Vokabeln und/oder Kontextdaten, die gesondert aber gleichwertig behandelt werden, erfolgt.

10. Verfahren nach Anspruch 8 oder 9, wobei das Beheben von Überschneidungen oder Widersprüchen in Schritt (j) zu einer Erhöhung oder Verringerung des Genauigkeitswertes bereits vorhandener Vokabeln und/oder Kontextdaten führt.

11. Verfahren zum Deinstallieren von Ergänzungsmodulen, vorzugsweise in einem Verfahren nach einem der Ansprüche 1 bis 10, wobei das Deinstallieren eines Ergänzungsmoduls aufweist: Entfernen der zu dem Ergänzungsmodul gehörenden Vokabeln und/oder Kontextdaten aus einer Ontologiedatenbank.

12. Verfahren nach Anspruch 11, wobei das Entfernen von Vokabeln und/oder Kontextdaten folgende Schritte aufweist:
(l) Melden der zu dem Ergänzungsmodul gehörenden Vokabeln und/oder Kontextdaten an die Ontologiedatenbank;
(m) Entfernen der zu dem Ergänzungsmodul gehörenden Vokabeln und/oder Kontextdaten aus der Ontologiedatenbank;
(n) Bestätigen oder Melden von Fehlern beim Entfernen der Vokabeln und/oder Kontextdaten aus der Ontologiedatenbank an das Ergänzungsmodul; und
(o) Trennen der Verbindung zwischen dem Ergänzungsmodul und der Ontologiedatenbank.

13. Verfahren nach Anspruch 11 oder 12, wobei das Entfernen des Ergänzungsmoduls zu einer Erhöhung oder Verringerung eines Genauigkeitswertes der Vokabeln und/oder Kontextdaten in der Ontologiedatenbank führt.

14. System zur Gebäudeautomation, insbesondere zur Durchführung eines Verfahrens nach einem der Ansprüche 1 bis 13 wobei das System aufweist:
ein Dialogkoordinatormodul konfiguriert zum Empfangen und/oder Senden von Dialogdaten an ein Dialog Ein-/Ausgabemodul
eine Ontologiedatenbank, wobei die Ontologiedatenbank bekannte Vokabeln und Kontextdaten enthält;
ein Kontextverarbeitungsmodul das mit dem Dialogkoordinatormodul und der Ontologiedatenbank verbunden ist und konfiguriert ist, um mit dem Dialogkoordinatormodul, der Ontologiedatenbank, und mit dem System verbundenen Geräten zu kommunizieren, und
ein Lernverarbeitungsmodul, das mit dem Dialogkoordinatormodul und der Ontologiedatenbank verbunden ist und konfiguriert ist, um mit dem Dialogkoordinatormodul und der Ontologiedatenbank zu kommunizieren,
wobei das Kontextverarbeitungsmodul ferner konfiguriert ist:
empfangene Dialogdaten mit bekannten Vokabeln und/oder Kontextdaten in der Ontologiedatenbank zu vergleichen;
das Vergleichsergebnis zu interpretieren und zu bewerten, indem das Kontextverarbeitungsmodul einen Genauigkeitswert für das Vergleichsergebnis vergibt und diesen in der Ontologiedatenbank speichert;
den Genauigkeitswert mit einem vorher festgelegten Schwellwert zu vergleichen;
Steuerbefehle zum Steuern der mit dem System verbundenen Geräte auszugeben, sobald das Kontextverarbeitungsmodul feststellt, dass der Genauigkeitswert des Vergleichsergebnisses größer ist als der vorher festgelegte Schwellwert; und
einen Lerndialog über das Dialogkoordinatormodul zu initiieren falls das Kontextverarbeitungsmodul feststellt, dass der Genauigkeitswert des Vergleichsergebnisses kleiner als der vorher festgelegte Schwellwert ist;
wobei das Lernverarbeitungsmodul ferner konfiguriert ist über das Dialogkoordinatormodul einen Lerndialog mit einem Nutzer durchzuführen, und neu gelernte Vokabeln und/oder Kontextdaten in der Ontologiedatenbank zu speichern, wobei der Lerndialog geeignet ist den Genauigkeitswert zu erhöhen oder zu vermindern.

15. System nach Anspruch 14, wobei das Lernverarbeitungsmodul ferner konfiguriert ist den Lerndialog zu bewerten und die Bewertung in der Ontologiedatenbank zu speichern.

16. System nach Anspruch 14 oder 15, wobei das System ferner aufweist:
ein Dialog Ein-/Ausgabemodul, das konfiguriert ist, die Dialogdaten von dem Dialogkoordinatormodul zu empfangen und/oder Dialogdaten an das Dialogkoordinatormodul zu übertragen, wobei das Dialog Ein-/Ausgabemodul ferner konfiguriert ist Dialogeingaben von einem Nutzer zu empfangen und/oder Dialogausgaben an einen Nutzer auszugeben.

17. System nach Anspruch 16, wobei das System ferner ein lokales und/oder externes Dialoginterpretermodul aufweist, wobei das Dialoginterpretermodul konfiguriert ist um die Dialogeingaben durch Kontextdaten anzureichern.

18. System nach einem der Ansprüche 14 bis 17, wobei das System zusätzlich einen Anschluss zur Installation/Deinstallation von Ergänzungsmodulen aufweist, wobei die Ergänzungsmodule neue Vokabeln und/oder Kontextdaten zur Erweiterung der Ontologiedatenbank bereitstellen.

19. System nach Anspruch 18, wobei das Kontextverarbeitungsmodul ferner konfiguriert ist bei der Installation der Ergänzungsmodule Überschneidungen oder Widersprüche der neuen mit alten Vokabeln und/oder Kontextdaten in der Ontologiedatenbank durch vorbestimmte Regeln zu beheben.

20. System nach Anspruch 18 oder 19, wobei das Kontextverarbeitungsmodul ferner konfiguriert ist bei der Installation der Ergänzungsmodule den Genauigkeitswert einer bereits bekannten Vokabel Aufgrund von Überschneidungen oder Widersprüchen der neuen mit alten Vokabeln in der Ontologiedatenbank zu erhöhen oder zu verringern.

21. System nach einem der Ansprüche 18 bis 20, wobei das Kontextverarbeitungsmodul ferner konfiguriert ist bei der Deinstallation eines Ergänzungsmoduls die zu dem Ergänzungsmodul gehörigen Vokabeln und/oder Kontextdaten aus der Ontologiedatenbank zu entfernen.

22. System nach Anspruch 21, wobei das Kontextverarbeitungsmodul ferner konfiguriert ist den Genauigkeitswert von bestimmten Vokabeln zu erhöhen oder zu verringern sobald ein Ergänzungsmodul deinstalliert wird.
